# EUROPEAN PATENT APPLICATION

(11) **EP 2 418 374 A2**
(43) Date of publication of application: **15.02.2012**
(21) Application number: 11162273.4
(22) Date of filing: 13.04.2011
(51) Int. Cl.: F03B 3/18

(54) **Tunnel turbine system generates potential energy from dormant kinetic energy**

(30) Priority: 13.04.2010 PK 3092010
(71) Applicant: Ur Rehman Alvi, Mujeeb, Karachi 75500 (PK)
(72) Inventor: Ur Rehman Alvi, Mujeeb, Karachi 75500 (PK)
(74) Representative: Carter, Stephen John

(57) **Abstract**

The "TUNNEL TURBINE SYSTEM" - Figure 1; have a COMPOSIT UNIT assembly it has two DEVICES: I and II; as a UNIT it is integrated in the PIPE LINE NETWORK SYSTEM; wherein stock (Gas or Liquid) is in transit, each DEVICE has a different function to perform, purpose and object to accomplish, viz:
1: COMPOSIT DEVICE - I: "GENERATOR DEVICE" integrated in PIPE LINE
NETWORK SYSTEM; wherein stock (Gas or Liquid) is in transit; has NOZZLE VENTURI INLETS - activates KINETIC ENERGY in DORMANT state inherently present and inbuilt in PIPE LINE SYSTEM to GENERATE POTENTIAL ENERGY therein, and;
2: COMPOSIT DEVICE - II: "EJECTOR CONTRAPTION DEVICE" coupled
with "GENERATOR DEVICE" as a UNIT is integrated in the PIPE LINE NETWORK SYSTEM; is built - incorporated around the PIPE LINE has an INLET;
inside has a SLIT VENTURI OUTLET to RESTORE VELOCITY PRESSURE loss if any in the PIPE LINE NETWORK SYSTEM; wherein the stock (Gas or Liquid) is in transit; it over comes technical problem of any BACK PRESSURE BUILDUP in the GENERATOR DEVICE.
In PIPE LINE NETWORK SYSTEM of "TUNNEL TURBINE SYSTEM", wherein inbuilt friendly KINETIC ENERGY in DORMENT state is inherently present - is harvested by COMPOSITE UNIT Assembly of two DEVICES integrated in PIPE LINE SYSTEM; viz; I: "GENERATOR DEVICE" - generates POTENTIAL ENERGY from KINETIC ENERGY in DORMENT state, and; II: "EJECTOR CONTRAPTION DEVICE" - restores VELOCITY PRESSURE loss; jointly / individually efficiently utilizes and supplements DORMENT KINETIC ENERGY potential inherently present in the SYSTEM; without effecting efficiency of PIPE LINE NETWORK or exposing contents in transit to contamination; and under VELOCITY PRESSURE continues haulage of stock in transit.

## Description

### BACKGROUND of the INVENTION:

I. For transportation of stock (Gas or Liquid) - man has laid a NETWORK
of PIPE LINE SYSTEM. In Pipe SYSTEM - VELOCITY PRESSURE subsists as a vehicle for stock in transit. At destination the PIPE LINE NETWORK SYSTEM terminates - VELOCITY PRESSURE therein simply evaporates and thereafter has NO KINETIC ENERGY in DORMANT state.

II. Whereas; stock (Gas or Liquid) in transit under VELOCITY PRESSURE in a PIPE LINE NETWORK SYSTEM; has massive inherent STATIC PRESSURE and KINETIC ENERGY in DORMENT state present in the PIPE LINE System. Present Invention "TUNNEL TURBINE SYSTEM" makes use of KINETIC ENERGY in DORMENT state to activate Potential Energy Generation; before PIPE LINE NETWORK SYSTEM terminates and VELOCITY PRESSURE evaporates; thus makes available vast POTENTIAL ENERGY GENERATION without incurring any FUEL USAGE or ENVIRONMENT POLLUTION and numerous other beneficial advantages.

III. Field of the Invention: This invention relates to ENERGY GENERATION; whereby KINETIC ENERGY in DORMENT STATE present in a PIPE LINE NETWORK SYSTEM is activated to generate POTENTIAL ENERGY.

IV. Prior Art: Known Scientific Principals in prior art as per below; are integrated, amalgamated and incorporated in the innovative System invention of POTENTIAL ENERGY GENERATION from KINETIC ENERGY in DORMENT state - wherein it induces a new dimension of function, purpose and System's efficiency increases many folds.

1: "WIND TURBINES FARMS":
(a) Gas / Wind are similar in physical properties and governed by the same principals. The cardinal principal involved in Wind Turbines Power Generation; a 20% increase in the wind velocity - increases the power generated with 73%, despite, AIR density decreases with temperature and altitude; "MAJOR FACTOR in POWER GENERATION is WIND VELOCITY³".
(b) The basics of Wind Kinetic Energy; 'P' (Power KW) attainable is: 'P' = ½pAV³ i.e. 0.5 X p (Mass Kg/m²) X A (Fan Area - sq. meters) X V³ (Velocity³ meters per second) = KW.

2: "VERTICAL WIND TUNNEL": "INDOOR SKYDIVING" enables human beings to FLY in air, through the FORCE of WIND being generated VERTICALLY. The cardinal PRINCIPAL of a TUNNEL is; "a 2^{ND} PRESSURE known as STATIC PRESSURE is always present in a DUCT / TUNNEL / PIPE; it acts equally in all SIDES of the CONDUIT - independent of VELOCITY or its MOVEMENT DIRECTION".

### The Present Invention:

The present invention is totally different from conventional systems producing renewable energy for a number of reasons as per below:-
a) The present invention eliminates the use of gigantic and extremely heavy structure; installation of Distribution System, and; gets rid of logistics problems thereof - more difficult to produce, fabricate, transport and install.
b) The present invention totally eliminates the USE of any kind of petroleum / other FUELS for ENERGY GENERATION, thus NO Greenhouse Gas (Carbon) Emission is produced; the System is totally free from all kinds of ENVIRONMENT POLLUTION or any TEMPERATURE increase.
c) The present invention has an added advantage of STATIC PRESSURE (TUNNEL) which gives CONSISTENCY to VELOCITY and DIRECTION that can be managed, controlled and regulated.
d) The present invention has a major advantage; DORMENT KINETIC ENERGY inherently present in the System can be transformed instantly into POTENTIAL mechanical energy.
e) The present invention has an additional major advantage; it is specifically located whereof most DORMENT KINETIC ENERGY in Dormant state is inherently present but Potential ENERGY is highly scarce and vitally required; whereof ENERGY Distribution System already exists.

### Innovative Features:

### "TUNNEL TURBINE SYSTEM GENERATES POTENTIAL

ENERGY from DORMENT KINETIC ENERGY"; the System has the following innovative features:
1. The "TUNNEL TURBINE" is the only System in the world that activates "KINETIC ENERGY" inherently present in a PIPE LINE NETWORK SYSTEM; from DORMANT STATE to GENERATE POTENTIAL ENERGY, without FUEL USAGE or ENVIRONMENT POLLUTION or any GREENHOUSE GAS (CARBON) EMISSION or temperature increase.
2. The "TUNNEL TURBINE" System of POTENTIAL ENERGY GENERATION is the only System in the world that transforms DORMENT KINETIC ENERGY instantly into POTENTIAL Mechanical KINETIC ENERGY - likewise HYDROPOWER or WINDMILL.
3. The "TUNNEL TURBINE" is the only System in the world that is specifically located whereof DORMENT KINETIC ENERGY is inherently present and more ENERGY GENERATION is vitally required - immune of fluctuating water supply or erratic wind velocity or there direction located in remote areas.
4. The "TUNNEL TURBINE" is the only System in the world that generates POTENTIAL ENERGY from KINETIC ENERGY present in DORMENT STATE in GAS or LIQUID Pipe Line System but before the stock is DRAINED OUT or DISSIPATED as FUEL or used as FEEDSTOCK or DISTRIBUTED / STORED at destination.
5. The "TUNNEL TURBINE" is the only System in the world that incorporates known Scientific Principals on which other different systems operate, viz. as under:-
   (a) "WIND TURBINES FARMS": "MAJOR FACTOR in POWER GENERATION is WIND VELOCITY³". (Air & Gas have similar physical properties)
   (b) "VERTICAL WIND TUNNEL": "a 2^{ND} PRESSURE known as STATIC PRESSURE is always present in a DUCT / TUNNEL / PIPE; it acts equally in all SIDES of the CONDUIT - independent of VELOCITY or its MOVEMENT DIRECTION".

### Brief description of the Drawings:

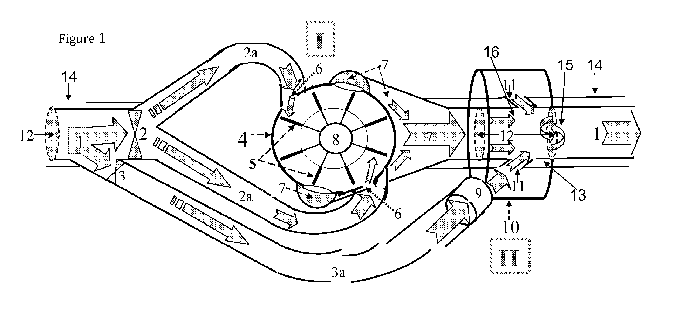

Figure 1 is a perspective view of the invention showing "TUNNEL TURBINE" System integrated in conventional Pipe Line Network System; wherein stock (GAS or LIQUID) is in transit under high VELOCITY PRESSURE; its COMPOSITE UNIT Assembly has two DEVICES: I and II integrated in Pipe Line Network System which instantly activates KINETIC ENERGY in DORMENT state therein into POTENTIAL mechanical KINETIC ENERGY without any FUEL USAGE - totally eliminates Greenhouse Gas (Carbon) Emission or ENVIRONMENT POLLUTION or Temperature increase.
a) DEVICE: I - FIGURE 1 page I; "GENERATOR DEVICE" of "TUNNEL TURBINE"; is integrated in the PIPE LINE NETWORK SYSTEM;, shows; PIPE LINE TUNNEL, stock (GAS / LIQUID) in transit therein, Control Valve with two Conduit Bypass Pipe Lines for major diversion of stock in transit, the TURBINE HOUSING, TURBINE IMPELLOR, two NOZZLE VENTURI INLETS, two OUTLETS, and GENERATOR SHAFT.
b) DEVICE: II - FIGURE 1 page I; "EJECTOR CONTRAPTION DEVICE" of "TUNNEL TURBINE" is coupled with "GENERATOR DEVICE" as COMPOSITE UNIT assembly and integrated in PIPE LINE NETWORK SYSTEM, shows; PIPE LINE TUNNEL, stock in transit therein, Control Valve with one Conduit Bypass Pipe Line for diversion of balance stock in transit, EJECTOR CONTRAPTION BODY with an INLET, PIPE LINE TUNNEL, SLIT VENTURI INLET opening in PIPE BODY of the NETWORK System.

### Detailed description of the Drawings:

The features, objects and advantages of the Invention will be fully understood from the following detailed description of the accompanying drawing of "TUNNEL TURBINE" System has a COMPOSITE UNIT of TWO DEVICES: I and II - Figure 1 page I; integrated in the PIPE LINE NETWORK SYSTEM; in which;
(i) The DEVICE - I; "GENERATOR DEVICE" of the "TUNNEL TURBINE"; shows; PIPE LINE System 14, stock (Gas or Liquid) 1 in transit, PIPE LINE TUNNEL 12, Control Valve 2, two Conduit Bypass Pipe Lines 2a (or more), two stock NOZZLE VENTURI INLETS 6 (or more), TURBINE HOUSING 4, TURBINE IMPELLOR 5 in HOUSING 4, two stock OUTLETS 7 (or more), and GENERATOR SHAFT 8. The "GENERATOR DEVICE" functions and operates as under:
   The PIPE LINE System 14 ; wherein stock (Gas or Liquid) 1 under VELOCITY PRESSURE is in transit in PIPE LINE TUNNEL 12; major part of stock 1 is diverted through Control Valve 2 connecting two Conduit Bypass Pipe Lines 2a the stock outflow connects two NOZZLE VENTURI INLETS 6 in TURBINE HOUSING 4 strikes the TURBINE IMPELLOR 5 in TURBINE HOUSING 4 from two directions with great VELOCITY PRESSURE - activates the GENERATOR SHAFT 8 at high speed and thereafter the stock exits through two OUTLETS 7 in TURBINE HOUSING 4. The DORMENT KINETIC ENERGY inherently present in PIPE LINE System 14 drives the "GENERATOR DEVICE" - generates Potential Energy.
(ii) The DEVICE - II; "EJECTOR CONTRAPTION DEVICE" of "TUNNEL TURBINE", shows; PIPE LINE System 14, stock (Gas or Liquid) 1 in transit, PIPE LINE TUNNEL 12, Control Valve 3, one Conduit Bypass Pipe Line 3a, INLET 9 in EJECTOR CONTRAPTION BODY 10, the SLIT VENTURI OUTLET 11 built in TUNNEL BODY 13 concealed inside EJECTOR CONTRAPTION BODY 10. The "EJECTOR CONTRAPTION DEVICE" functions and operates as under:
   The PIPE LINE System 14 wherein; stock (Gas or Liquid) 1 in transit in PIPE LINE TUNNEL 12 under VELOCITY PRESSURE, balance stock is diverted through Control Valve 3 connecting one Conduit Bypass Pipe Line 3a - the stock outflow connects INLET 9 of EJECTOR CONTRAPTION BODY 10, the stock under high VELOCITY PRESSURE is inducted in EJECTOR CONTRAPTION BODY 10; the stock self ejects through SLIT VENTURI OUTLET 11 built in PIPE BODY 13 concealed inside EJECTOR CONTRAPTION BODY 10 into PIPE TUNNEL 12 passage, wherein; it causes VORTEX 15 just above the SLIT VENTURI OUTLET 11 and creates VACCUM 16 just below the SLIT VENTURI OUTLET 11 in PIPE LINE TUNNEL 12 passage - eliminates back pressure buildup and extracts with greater speed the stock exiting from OUTLETS 7 of "GENERATOR TURBINE DEVICE - I" into PIPE LINE 12 passage - restores VELOCITY PRESSURE loss if any in PIPE LINE 12. The stock 1 continues its onward transit journey to destination without any VELOCITY PRESSURE loss in PIPE LINE System 14.

### Paragraphs summarizing the invention:

a: "TUNNEL TURBINE SYSTEM" GENERATES POTENTIAL ENERGY from KINETIC ENERGY in DORMENT state present in a PIPE LINE NETWORK SYSTEM; wherein stock (Gas or Liquid) under VELOCITY PRESSURE is in transit; makes enormous POTENTIAL ENERGY available without incurring any FUEL USAGE or GREENHOUSE GAS EMISSION or ENVIRONMENT POLLUTION.
b: "TUNNEL TURBINE"; as summarized in paragraph a; wherein stock (Gas or Liquid) in transit under VELOCITY PRESSURE subsists as a vehicle in a PIPE LINE NETWORK SYSTEM; has inbuilt KINETIC ENERGY in DORMANT state - contained therein by inherent STATIC PRESSURE.
c: "TUNNEL TURBINE"; as summarized in paragraphs a and b, wherein COMPOSIT UNIT Assembly has two DEVICES - integrated in PIPE LINE NETWORK SYSTEM; each DEVICE has a different function, purpose and object to accomplish, viz; "GENERATOR DEVICE" - I is coupled with "EJECTOR CONTRAPTION DEVICE" - II in "TUNNEL TURBINE SYSTEM"; Figure 1 - jointly / individually efficiently utilizes and supplements the DORMENT KINETIC ENERGY potential inherently present in the PIPE LINE NETWORK SYSTEM 14.
d: "TUNNEL TURBINE"; as summarized in paragraphs b and c; wherein the power to drive is KINETIC ENERGY in DORMENT State inherently present as VELOCITY PRESSURE in Pipe Line Network System 14;
   wherein "GENERATOR DEVICE" - I activates KINETIC ENERGY from DORMANT STATE into POTENTIAL ENERGY, and; "EJECTOR CONTRAPTION DEVICE" - II supplements "GENERATOR DEVICE" - I and restores VELOCITY PRESSURE loss if any in Pipe Line System 14.
e: "TUNNEL TURBINE"; as summarized in paragraphs b, c and d; wherein stock 1 in transit under VELOCITY PRESSURE through TUNNEL 12 is diverged to pass through two Control Valves 2 and 3; Control Valve 2 controls major outflow of stock 1 from TUNNEL 12 into TWO Conduit Bypass Pipe Lines 2a - connects TWO NOZZLE VENTURI INLETS 6 in "GENERATOR DEVICE" - I, and; Control Valve 3 controls balance outflow of stock 1 from TUNNEL 12 into ONE Conduit Bypass Pipe Line 3a - connects INLET 9 in "EJECTOR CONTRAPTION DEVICE" - II.
f: "GENERATOR DEVICE" - I of TUNNEL TURBINE SYSTEM as summarized in paragraphs c, d and e; GENERATES POTENTIAL ENERGY from KINETIC ENERGY in DORMENT state; comprises of; PIPE LINE System 14; Stock 1 in transit under high VELOCITY PRESSURE; Control Valve 2 controls major outflow of Stock 1 into two Conduit Bypass Pipe Lines 2a; NOZZLE VENTURI INLETS 6; TURBINE HOUSING 4; TURBINE IMPELLOR 5; GENERATOR SHAFT 8; two OUTLETS 7.
g: "GENERATOR DEVICE" - I: of TUNNEL TURBINE SYSTEM; as summarized in paragraphs e, & f; more particularly; major outflow of stock through two NOZZLE VENTURI INLETS 6 strikes TURBINE IMPELLOR 5 in TURBINE HOUSING 4 from two different angles / directions with great VELOCITY PRESSURE activates (turns) the GENERATOR SHAFT 8 at high speed.
h: "GENERATOR DEVICE" - I: of TUNNEL TURBINE SYSTEM; as summarized in paragraphs f & g; the stock 1 thereafter EXITS from the TURBINE HOUSING 4 through two OUTLETS 7 without being contaminated continues journey to be used as FUEL, FEEDSTOCK or STORED at destination; least effecting PIPE LINE NETWORK SYSTEM 14 haulage efficiency.
i: "GENERATOR DEVICE" - I: of TUNNEL TURBINE SYSTEM; as summarized in paragraphs f, g, & h; the number of Pipe Conduit Bypass Lines 2a and NOZZLES INLETS 6 thereof be increased as and when required to strike the TURBINE IMPELLOR 5 in TURBINE HOUSING 4 from two or more different angles/directions to impede any energy loss and enhance Generation efficiency, according also increases the number of OUTLETS 7.
j: "TUNNEL TURBINE SYSTEM"; as summarized in the preceding, more particularly the inbuilt KINETIC ENERGY in DORMENT state in TUNNEL 12; wherein the "GENERATOR DEVICE ― I" integrated in PIPE LINE NETWORK SYSTEM 14 generates POTENTIAL KILOWATT HOURS (KWh) without FUEL USAGE - does NOT dissipate any Greenhouse Gas (Carbon) Emission in environment.
k: "EJECTOR CONTRAPTION DEVICE" - II: of TUNNEL TURBINE SYSTEM; as summarized in paragraphs a, c, d, & e comprises of; PIPE LINE 14; stock (Gas or Liquid) 1; Control Valve 3; ONE Conduit Bypass Pipe Line 3a; stock 1 INLET 9; EJECTOR CONTRAPTION BODY 10 incorporated and built around the TUNNEL BODY 13; SLIT VENTURI OUTLET 11 - SLIT incision is built-in TUNNEL BODY 13 circumference concealed inside CONTRAPTION BODY 10 and opens into TUNNEL passage 12.
I: "EJECTOR CONTRAPTION DEVICE" - II: of TUNNEL TURBINE SYSTEM; as summarized in paragraph k; more particularly; the high VELOCITY PRESSURE outflow of stock 1 through Conduit Bypass Pipe Line 3a connects INLET 9 in EJECTOR CONTRAPTION BODY 10.
m: "EJECTOR CONTRAPTION DEVICE" - II: of TUNNEL TURBINE SYSTEM; as summarized in paragraphs k, & I; more particularly; the stock 1 under high VELOCITY PRESSURE is SELF EJECTED into TUNNEL passage 12 through SLIT VENTURI OUTLET 11 concealed inside EJECTOR CONTRAPTION BODY 10 wherein it causes VORTEX 15 in TUNNEL passage 12 just above the SLIT VENTURI OUTLET 11 and creates VACCUM 16 just below the SLIT VENTURI OUTLET 11.
n: "EJECTOR CONTRAPTION DEVICE" - II: of TUNNEL TURBINE SYSTEM; as summarized in paragraphs k, I & m; wherein VACCUM 16 formation just below the SLIT VENTURI OUTLET 11 in TUNNEL passage 12 extracts with greater impetus stock 1 EXITING from OUTLET 7 of "GENERATOR DEVICE I" - eliminates BACK PRESSURE BUILDUP if any in "GENERATOR DEVICE" ― I.
o: "TUNNEL TURBINE SYSTEM"; as summarized in the preceding paragraphs, more particularly balance stock 1 under high VELOCITY PRESSURE - diverged to pass through Control Valve 3 and Bypass Pipe Line 3a into INLET 9 of EJECTOR CONTRAPTION BODY 10 is self ejected through concealed SLIT VENTURI OUTLET 11, wherein VORTEX 15 formation above SLIT VENTURI OUTLET 11 accelerates incoming stock flow from "GENERATOR DEVICE I" with VOLUME increase from LOW VELOCITY to HIGH VELOCITY - restores VELOCITY PRESSURE loss if any to stock 1 in transit on onward haulage in the PIPE LINE NETWORK SYSTEM 14.
p: "TUNNEL TURBINE SYSTEM"; as summarized in the preceding paragraphs, wherein inbuilt friendly KINETIC ENERGY in DORMENT state - inherently present in PIPE LINE NETWORK SYSTEM - is efficiently harvested by COMPOSIT UNIT Assembly of two DEVICES, viz; "GENERATOR DEVICE - I" and; "EJECTOR CONTRAPTION DEVICE - II"; without effecting haulage efficiency of stock 1 in transit under VELOCITY PRESSURE in PIPE LINE NETWORK SYSTEM 14, or exposing contents in transit therein to contamination.
q: "TUNNEL TURBINE SYSTEM"; as summarized in the preceding paragraphs, wherein each DEVICE has a different function, purpose and objective to achieve, but are conducive / productive to each other to achieve efficient Potential Energy generation and VELOCITY PRESSURE loss restoration in the PIPE LINE NETWORK SYSTEM 14.
r: "TUNNEL TURBINE SYSTEM"; "GENERATOR DEVICE" - I: and "EJECTOR CONTRAPTION DEVICE" - II: hereinbefore referred to in any one of the proceeding paragraphs, is designed, constructed, arranged and adopted to operate substantially as hereinbefore described with reference to and shown respectively in Figure 1 of the accompanying drawing.

## Claims

1. A tunnel system that generates potential energy from dormant kinetic energy, which system comprises: the pipe line network (14) hauls stock (1) (gas or liquid) under velocity pressure that has enormous amount of inbuilt kinetic energy in dormant state contained in pipe tunnel (12) by inherent static pressure; further comprising a composite unit assembly having two devices:
i) generator device, and;
ii) ejector contraption device.
The composite unit, generator device (i) coupled with ejector contraption device (ii), which is integrated in pipe tunnel (12); stock (1) in transit in pipe tunnel (12) is diverged to pass through two control valves (2) and (3); connecting two bypass conduit pipe lines (2a) and (3a) respectively; major stock (1) portion under velocity pressure passes through (2a) connecting "generator device" (i); dormant inbuilt kinetic energy in stock (1) activates generator impellor therein to rotate and generate potential kilowatt hours (KWh) without fuel usage; thus free of any greenhouse gas emission environment pollution; stock (1) consequently exits from "generator device" (i) and enters into "ejector contraption device" (ii); balance stock (1) portion under velocity pressure through (3a) motivates "ejector contraption device (ii) stimulates vortex (15) and suction (16) in pipe tunnel (12) accelerates exit of stock (1) from "generator device" (i) and eliminates any back pressure built-up in "generator device" (i); wherein each device (i) and (ii) of "composite unit assembly" has a different purpose, function and objective to achieve to maintain stability in pipe tunnel (12); thereafter stock 1 (gas / liquid) passes through an auxiliary device diffuser (17) installed in tunnel (12) which changes stock's (1) vortex (15) rotational velocity into axial velocity accelerates stock (1) (gas or liquid) axial flow; thereafter continues haulage / transit in pipe line network (14) unabated.

2. The tunnel system as claimed in claim 1, wherein velocity pressure, static pressure and inbuilt dormant kinetic energy coexist in pipe tunnel (12) / pipe line network (14) as integral part of each other.

3. The tunnel system as claimed in claim 2, wherein velocity pressure subsists as a vehicle contained by static pressure in pipe line network (14) hauling stock (1) (gas or liquid); inherently has inbuilt enormous dormant kinetic energy potential; motivates, stimulates and activates composite unit assembly (i) and (ii) integrated in pipe tunnel (12).

4. The tunnel system as claimed in claims 1 and 3 wherein the generator device (i) and the "ejector contraption device" (ii); are joined / coupled to form composite unit assembly integrated in pipe tunnel (12); jointly / individually utilizes / supplements dormant kinetic energy potential inherently present in the pipe line network (14).

5. The tunnel system as claimed in claims 1, 3 and 4 wherein stock 1 in transit under velocity pressure through tunnel (12) is diverged to pass through two control valves (2) and (3) wherein control valve (2) regulates major outflow of stock (1) from tunnel (12) into two conduit bypass pipe lines (2a) and control valve (3) regulates balance outflow of stock (1) from tunnel (12) into one conduit bypass pipe line (3a).

6. The tunnel system as claimed in claim 3, 4 and 5 in which generator device (i) comprises of; pipe tunnel (12); stock (1) (gas or liquid) in transit under high velocity pressure; control valve (2), major outflow of stock (1), two conduit bypass pipe lines (2a); two nozzle venturi inlets (6); turbine housing (4); turbine impellor (5); generator shaft (8); and two outlets (7).

7. The tunnel system as claimed in claims 5 and 6 comprises of generator device (i); more particularly major outflow of stock (1) that passes through control valve (2) and two conduit bypass pipe lines (2a) connects two nozzle venturi inlets (6) of generator device (i); strikes turbine impellor (5) in turbine housing (4) from two different angles / directions with great velocity pressure activates (turns) the generator shaft (8) at high speed generates potential kilowatt hours (KWh) without any fuel usage and thus is totally free of any greenhouse gas emission pollution in environment.

8. The tunnel system as claimed in claims 5, 6, & 7 comprises of a generator device (i), wherein the number of conduit pipe bypass lines (2a) and nozzles inlets (6) thereof be increased to connect the generator device (i) as and when required to strike the turbine impellor (5) in turbine housing (4) therein from two or more different angles / directions to impede any energy loss and enhance generation efficiency, according also increases the number of outlets (7) in turbine housing (4).

9. The tunnel system as claimed in claims 7 and 8 comprises of a generator device (i) wherein the stock (1) exits from the generator device (i) turbine housing (4) through two outlets (7) and enters into ejector contraption device (ii) to continue onward transit journey to be used as fuel, feed-stock or stored at destination and least effecting pipe line network (14) haulage efficiency.

10. The tunnel system as claimed in claims 1, 3, 4 and 5 wherein ejector contraption device (ii) comprises of pipe tunnel (12), stock (gas or liquid) (1), control valve (3), balance outflow of stock (1), one conduit bypass pipe line (3a), inlet (9), ejector contraption body (10) incorporated and built around tunnel body (13), slit venturi outlet (11), slit incision built-in tunnel body (13) circumference concealed inside contraption body (10) opens into tunnel passage (12).

11. The tunnel system as claimed in claim 10 comprises of ejector contraption device (ii) wherein, high velocity pressure outflow of balance stock (1) through control valve (3) and conduit bypass pipe line (3a) connects inlet (9) in ejector contraption body (10) motivates / stimulates ejector contraption device (ii); more particularly stock (1) under high velocity pressure is self-ejected into tunnel (12) through venturi (11) causes vortex (15) and creates vacuum (16) in tunnel (12) (pipe line) of the ejector contraption device (ii).

12. The tunnel system as claimed in claims 9, 10 and 11 comprises of ejector contraption device (ii) wherein vacuum (16) formation just below venturi outlet (11) in tunnel passage (12) sucks out with greater impetus stock (1) out flowing / exiting from outlet (7) of generator device (i), eliminates back pressure buildup if any in generator device (i).

13. The tunnel system as claimed in preceding claims, more particularly, balance stock (1) outflow from tunnel (12) under high velocity pressure, diverged to pass through control valve (3) and bypass conduit pipe line (3a) into inlet (9) of ejector contraption body (10), is self-ejected through concealed venturi outlet (11), wherein vortex (15) formation above venturi outlet (11) accelerates outflow stock (1) exiting from generator device (i) increases volume / velocity from low velocity to high velocity, maintains stability in stock (1) transit and restores velocity pressure loss if any for on onward haulage in the pipe line network (14).

14. The tunnel system as claimed as claimed in preceding claims, wherein an auxiliary device diffuser (17) is installed in tunnel (12) (pipe line) changes stock's (1) outflow from ejector contraption device (ii) vortex (15) rotational velocity into axial velocity accelerates stock (1) outflow in pipe line (14).

15. The tunnel system as claimed in preceding claims, wherein inbuilt friendly kinetic energy in dormant state inherently present in pipe line network (14) is efficiently harvested by composite unit assembly of two devices viz generator device (i) and ejector contraption device (ii) without effecting haulage efficiency of stock (1) in transit under velocity pressure in pipe tunnel (12) or exposing the contents in transit therein to contamination.

16. The tunnel system as claimed in preceding claims wherein each device has a different function, purpose and objective to achieve but are conducive / productive to each other to achieve efficient potential energy generation, velocity pressure loss restoration and maintain stability in pipe line network system (1) haulage.

17. The tunnel system which comprises of composite unit generator device (i), ejector contraption device (ii) and auxiliary device diffuser (17), hereinbefore referred to in any one of the preceding claims, is individually or collectively designed, constructed, arranged and adopted to operate substantially as hereinbefore described with reference to the accompanying drawings.
